(19) Europäisches Patentamt
European Patent Office
Office européen des brevets

(11) **EP 2 304 232 B1**

(12) **EUROPÄISCHE PATENTSCHRIFT**

(45) Veröffentlichungstag und Bekanntmachung des Hinweises auf die Patenterteilung:
**08.04.2015 Patentblatt 2015/15**

(51) Int Cl.:
*F03D 11/00* (2006.01)    *F03D 3/06* (2006.01)
*F03D 7/02* (2006.01)

(21) Anmeldenummer: **09713132.0**

(22) Anmeldetag: **16.02.2009**

(86) Internationale Anmeldenummer:
**PCT/EP2009/001076**

(87) Internationale Veröffentlichungsnummer:
**WO 2009/103473 (27.08.2009 Gazette 2009/35)**

(54) **VERFAHREN ZUR AUSLEGUNG EINER WINDKRAFTANLAGE**

METHOD FOR DIMENSIONING A WIND POWER PLANT

PROCEDE DE DIMENSIONNEMENT D'UNE EOLIENNE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **18.02.2008 DE 102008009740**

(43) Veröffentlichungstag der Anmeldung:
**06.04.2011 Patentblatt 2011/14**

(73) Patentinhaber: **IMO Holding GmbH**
**91350 Gremsdorf (DE)**

(72) Erfinder: **SCHRÖPPEL, Werner**
**90530 Wendelstein (DE)**

(74) Vertreter: **Küchler, Stefan**
**Patentanwalt**
**Färberstrasse 20**
**90402 Nürnberg (DE)**

(56) Entgegenhaltungen:
**EP-A2- 1 132 614        WO-A-2007/003866**
**WO-A-2007/006301        WO-A-2007/082532**
**WO-A1-2007/104306      DE-A1-102005 026 141**
**DE-C1- 3 909 664        US-A- 3 791 706**

**Beschreibung**

Die Erfindung richtet sich auf ein Verfahren gemäß Anspruch 1 zur Auslegung einer Windkraftanlage, deren elektrische Nennleistung $P_{W,Nenn}$ gleich oder größer ist als 1,5 MW, und/oder deren Rotordurchmesser gleich oder größer ist als 70 m, und/oder die wenigstens ein Rotorblattlager aufweist mit einem Laufkreisdurchmesser $D_{pw}$ von 1.500 mm oder darüber, wobei die Rotorblätter zur Minimierung der statischen und/oder dynamischen Strukturlast und/oder zur Dämpfung von Schwingungen, bspw. durch Erzeugung von Gegenkräften zur Kompensation störender Kräfte und Momente, auch dann verstellt werden, wenn eine gleichbleibende Windgeschwindigkeit $v_8$ dies nicht erfordert.

Windkraftanlagen bestehen üblicherweise aus einem hohen Turm, auf dessen Spitze eine um eine vertikale Achse verdrehbare Gondel sitzt. Darin befindet sich ein Generator, dessen Rotor mit einer Rotornabe gekoppelt ist, die sich am vorderen Ende der Gondel befindet und mehrere, etwa radial auskragende Rotorblätter aufweist, welche den Wind einfangen und dank ihres Anstellwinkels dabei den Rotor in Drehbewegung versetzen.

Obwohl diese Technik sich mittlerweile tausendfach bewährt, gibt es dennoch gewisse Nachteile, welche bei der Konstruktion berücksichtigt werden müssen.Ein großer Nachteil ist, dass der bspw. 80 m hohe Turm naturgemäß nicht völlig starr gebaut werden kann, sondern ein schwingungsfähiges Gebilde darstellt, mit einer eigenen Resonanzfrequenz. Diese Schwingungen können durch alle möglichen Faktoren ausgelöst werden, bspw. durch Windböen oder bei einem Sturm, etc. Damit der Turm diese Schwingungen zerstörungsfrei ertragen kann, wird er üblicherweise äußerst massiv gebaut, was erhebliche Zusatzkosten verursacht. Dennoch schwankt die Gondel einer solchen Windkraftanlagen oftmals um einen Meter oder gar noch mehr hin und her, was für die Struktur des Turms, der üblicherweise aus Stahl und/oder Beton besteht, aber auch für die Struktur des Turmhauses (Gondel) und der Rotornabe, keinesfalls vorteilhaft ist.

Die WO 01/77524 A1 versucht zwar, solche Schwingungen möglichst zu umgehen, indem eine der Eigenfrequenz des Turms entsprechende Drehzahl nach Möglichkeit vermieden wird. Dies führt jedoch nicht zum Erfolg, weil die Eigenfrequenz bei einem Turmbauwerk auch von anderen Frequenzen angeregt wird; denn die Resonanzüberhöhung entspricht nicht einer schmalen Spitze, sondern ist relativ breit, d.h., bedeckt ein nicht unerhebliches Frequenzband.

Außerdem ist zu bedenken, dass die den Rotor einer Windkraftanlage anströmende Luft aufgrund der Reibung am Boden höhenabhängig ist und zwar derart, dass im unteren, bodennahen Bereich der Anlage eine geringere, im oberen Bereich hingegen höhere Geschwindigkeit herrscht. Aus diesem Grund greift selbst bei laminarer. Anströmung mit zeitlich nicht veränderlicher Geschwindigkeit an einem Rotorblatt, das senkrecht nach oben gerichtet ist, eine höhere Kraft an als an einem senkrecht nach unten gerichteten.

Dieses führt bei einer Windkraftanlage mit einem Blatt zu einer oszillierenden Querkraft auf den Turm und damit zu einer Biegeschwingung, die sich aus einem statischen sowie aus einem periodischen Anteil zusammensetzt, dessen Periodendauer dem Kehrwert der Rotordrehzahl entspricht. Bei Windkraftanlagen mit mehr als einem Blatt nimmt der periodische Anteil gegenüber der statischen Auslenkung ab und verschwindet, sofern bei hinreichend großer Blattanzahl die Blätter den von ihnen überstrichenen Rotationsbereich vollständig bedecken. Für Windkraftanlagen mit drei Blättern lässt sich jedoch zeigen, dass das aus einer laminaren, zeitlich nicht veränderlichen Anströmung resultierende Biegemoment auf den Turm in etwa entsprechend der nachfolgenden Gleichung vom Umlaufwinkel des Rotors und damit von der Rotordrehzahl abhängt:

$$M = A - B \cos(2\varphi) - C \sin(b\varphi)$$

bzw. $M = A - B \cos[(2\pi/60) 2nt] - C \sin[(2\pi/60) bnt]$

Hierbei sind:

M =  Biegemoment
A,B,C =  konstante Faktoren
b=  Anzahl der Rotorblätter
$\varphi$ =  Umlaufwinkel des Rotors
n =  Drehzahl des Rotors
t =  Zeit

Zusätzlich zu der statischen Auslenkung enthält das Biegemoment in diesem Fall zwei periodische Anteile, die mit einer doppelten Rotorfrequenz bzw. einer mit der Rotorblattanzahl multiplizierten Rotorfrequenz den Turm der Windkraftanlage zu Biegeschwingungen anregen. Aufgrund dieser zwei periodischen Anteile mit um einen Faktor von bspw. 1,5 unterschiedlicher Frequenz ist es kaum möglich, den Resonanzbereich der Turmkonstruktion schnell zu durchsteuern, so dass der Vorschlag lt. WO 01/77524 A1 nicht praktikabel ist.

Andererseits werden von der beschriebenen Biegebewegung durch die rotierenden Bauteile Kreiselkräfte hervorgerufen, die sich in Form eines Momentes um die Turmachse bemerkbar machen. Daneben ist für das Rotordrehmoment ebenfalls ein periodischer Anteil zu erwarten, der über die Generator- und/oder Getriebeabstützung zu einer weiteren Biegeanregung auf den Turm führt. Aufgrund der Höhenabhängigkeit der Windgeschwindigkeit ist daher mit drehzahlabhängigen Drehmomenten in allen drei Koordinatenrichtungen sowie mit horizontalen Querkräften zu rechnen.

Andererseits läßt sich durch umlaufwinkelabhängige Nachführung der Rotorblattanstellung der Einfluss des Windgradienten auf die Windkraft sowie die durch sie hervorgerufene Schwinganregung abmindern und damit die Beanspruchung der im Kraftfluss befindlichen Bauteile und insbesonderes Turmes reduzieren.

Deshalb ist bereits von einigen Erfindern vorgeschlagen worden, die insbesondere von solchen Schwingungen ausgehenden Belastungen des Turms einer Windenergieanlage zu reduzieren, indem aktiv entgegengewirkt wird. Bspw. beschreibt die EP 1 701 034 A2 ein Verfahren, um in Abhängigkeit von den Pendelschwingungen des Turms einer Windkraftanlage durch unterschiedliche, insbesondere jeweils gegenphasige Anstellung der Rotorblätter phasenrichtig eine die Schwingungen bremsende Kraft zu erzeugen. Einen ähnlichen Offenbarungsgehalt hat die DE 101 13 038 A1.

Die DE 197 39 164 A1 versucht durch eine auf die Rotorblattverstelleinrichtung einwirkende Regelung, Gier- und Nickmomente zu kompensieren.

Die WO 01/33075 A1 als auch die WO 2007/104306A1 beschreiben Maßnahmen, um die von unterschiedlichen (Wind-) Lasten herrührenden, asymmetrischen Belastungen des Rotors und damit der gesamten Tragstruktur nach Möglichkeit zu kompensieren, indem die Rotorblätter in definierter Weise verstellt werden.

Von den Vorerfindern wurde jedoch bislang nicht bedacht, dass eine Windenergieanlage allein schon hinsichtlich ihres mechanischen Verhaltens ein sehr komplexes System ist. Bspw. sind Schwingungen der tragenden Struktur um so kritischer, je größer die Masse am oberen Ende des Turms ist. Denn dadurch wird die Resonanzfrequenz der mechanischen Schwingungen des Turms abgesenkt, und naturgemäß haben niederfrequentere Schwingungen mehr Energie als höherfrequente. Es gilt daher, die Masse im Bereich der Gondel und des Rotors so niedrig als möglich zu halten. Dies gilt für alle dortigen Bauteile, insbesondere auch für den Rotor und alle seine Komponenten, bspw. auch für sämtliche Lagerungen, d.h. Rotorhauptlager sowie Rotorblattlager. Solche Bauteile können daher nicht beliebig überdimensioniert werden, ohne dabei gravierende Nachteile in der Statik hinnehmen zu müssen. Dieses Problem ist um so stärker, je größer eine Windkraftanlage ist, also wenn die elektrische Nennleistung $P_{W,Nenn}$ der Anlage gleich oder größer ist als 1,5 MW, und/oder wenn der Rotordurchmesser gleich oder größer ist als 70 m, und/oder wenn bei wenigstens einem Rotorblattlager der Laufkreisdurchmesser $D_{pw}$, d.h. der Durchmesser der durch die Mittelpunkte aller Wälzkörper einer Reihe verlaufenden Kreislinie, gleich oder größer ist als 1.500 mm.

Darüber hinaus kann zwar eine derartige, "aktive" Gegensteuerung über die Rotorblattanstellwinkel die Schwingungen des Turms reduzieren; andererseits stellt die demgemäß vergleichsweise häufige Verstellung der Rotorblätter ganz andere Anforderungen an die Blattlager als die bisherige "passive" Technik, bei welcher eine Rotorblattverstellung nur als Antwort auf veränderte Windverhältnisse erfolgte.

Die üblicherweise verwendeten Rotorblattlager sind solchen Belastungen nicht gewachsen und verschleißen daher sehr schnell, dieses Problem konnte bisher nicht gelöst werden. Da der Ausbau eines defekten Lagers mit einem hohen Kostenaufwand verbunden ist, hat man bisher in der Praxis davon abgesehen, die theoretisch bereits sehr weit ausgereiften, "aktiven" Regelkonzepte zur Verminderung der Turmschwingungen in die Tat umzusetzen.

Aus diesen Nachteilen des beschriebenen Standes der Technik resultiert das die Erfindung initiierende Problem, wie die Belastung für die Struktur des Turms und der Gondel einer Windkraftanlage minimiert werden kann, bzw. Schwingungen minimiert werden können, ohne dass infolgedessen ein unzulässig hoher Verschleiß oder gar Ausfall betriebswichtiger Teile - bspw. der Rotorblattlager-innerhalb der geforderten, meist, 20-jährigen Betriebsdauer der Windenergieanlage zu befürchten ist.

Die Lösung dieses Problems gelingt bei einem Verfahren gemäß Anspruch 1 zur Auslegung einer Windenergieanlage, deren elektrische Nennleistung $P_{W,Nenn}$ gleich oder größer ist als 1,5 MW, und/oder deren Rotordurchmesser gleich oder größer ist als 70 m, und/oder die wenigstens ein Rotorblattlager aufweist mit einem Laufkreisdurchmesser $D_{pw}$ von 1.500 mm oder darüber, wobei die Rotorblätter zur Minimierung der statischen und/oder dynamischen Strukturlast und/oder zur Dämpfung von Schwingungen, bspw. durch Erzeugung von Gegenkräften zur Kompensation störender Kräfte und Momente, auch dann verstellt werden, wenn eine gleichbleibende Windgeschwindigkeit $v_8$ dies nicht erfordert, dadurch, dass zur Lagerung der Rotorblätter jeweils Wälzlager verwendet werden, die für eine hohe dynamische Lebensdauer optimiert sind, indem die gesamte, nach DIN ISO 281 bestimmte, dynamische axiale Tragzahl $C_{a,ges}$ aller an der Kraftübertragung in einer axialen Richtung beteiligten Reihen $(\mu)$ eines verwendeten Wälzlagers nach DIN ISO 281 wenigstens dem 1,5-fachen, vorzugsweise wenigstens dem 1,55-fachen, insbesondere dem 1,6-fachen, der dynamischen axialen Tragzahl $C_{a,ref}$ nach DIN ISO 281 einer zweireihigen Kugeldrehverbindung mit vergleichbarem Bauvolumen, berechnet aus der Fläche des Wälzlagerquerschnitts (ohne Berücksichtigung von Hohlräumen innerhalb desselben) mal dem Umfang am Flächenschwerpunkt, sowie mit untereinander identischen Kugeln in beiden Reihen und mit einem Tragwinkel a von 45° entspricht:

$$C_{a,ges} \geq k_1 * C_{a,ref},$$

wobei $k_1 = 1,5$, vorzugsweise $k_1 = 1,55$, insbesondere $k_1 = 1,6$.

Damit korrespondiert eine Bemessung, wonach die nach DIN ISO 281 bestimmte, nominelle Lebensdauer $L_{10}$ eines verwendeten Wälzlagers wenigstens dem 3,375-fachen, vorzugsweise wenigstens dem 3,75-flachen, insbesondere wenigstens dem 4,0-fachen der nach DIN ISO 281 berechneten Lebensdauer $L_{10,ref}$ einer zweireihigen Kugeldrehverbindung mit vergleichbaren Abmessungen hinsichtlich der Fläche des Lagerquerschnitts und dem Umfang am Flächenschwerpunkt sowie mit untereinander identischen Kugeln in beiden Reihen und mit einem Tragwinkel a von 45° entspricht:

$$L_{10} = C_{a,ges} / P_a \geq k_2 * L_{10,ref},$$

wobei $k_2 = 3,375$, vorzugsweise $k_2 = 3,75$, insbesondere $k_2 = 4,0$.

Untersuchungen haben bestätigt, dass durch die solchermaßen erhöhte Lebensdauer die Beeinträchtigung durch die intensivere Belastung infolge oftmaliger Überrollung des für die Lebensdauer maßgeblichen höchstbelasteten Laufbahnabschnittes ausgeglichen wird, so dass sich eine für die Anwendung als Rotorblattlager ausreichende, tatsächliche Betriebsdauer ergibt.

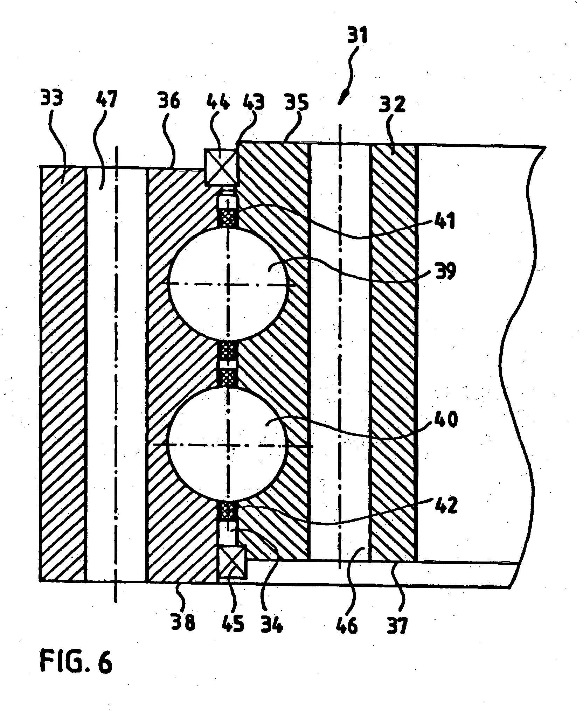

Ein erfindungsgemäßes Rotorblattlager stellt eine Spezialanfertigung dar, die auf eine hohe Überrollungszahl und damit eine höhere Betriebsdauer unter gleichen Bedingungen optimiert ist. Der Fachmann hat nun eine klare Formel zur Berechnung eines geeigneten Rotorblattlagers für eine gegebene Windkraftanlage, auch oder gerade wenn dabei zur Minimierung der statischen und dynamischen Belastungen der Tragstruktur eine häufige Verstellung der Rotorblattanstellwinkel vorgenommen wird. Anhand der in der Fig. 6 im Querschnitt wiedergegebenen Referenz-Kugeldrehverbindung, die auf die gewünschten Größen für $F_Q$ (Fläche des von Ausnehmungen befreiten gesamten Lagerringquerschnitts) und $R_{F,SP}$ (Radius des Flächenschwerpunkts der Querschnittsfläche) maßstäblich vergrößert oder verkleinert werden kann, also ohne Veränderung der Längenverhältnisse, läßt sich für jeden durch $F_Q$ und $R_{F,SP}$ definierten Anwendungsfall ein Referenzwert für die dynamische axiale Tragzahl ermitteln, der sodann wenigstens um den Faktor 1,5 zu überschreiten ist. Dabei ist zu berücksichtigen, dass das Produkt aus $F_Q * 2 * \pi * R_{F,SP}$ etwa dem Volumen V des betreffenden Rotorblattlagers entspricht und somit ein hinsichtlich dessen Volumen V, aber auch annähernd hinsichtlich seiner Masse m, vergleichbares Referenz-Lager definiert, außerdem mit einer ebenfalls definierten, d.h. genormten Geometrie des Lagerquerschnittes entsprechend Fig. 6.

Bei jeder Lagerkonstruktion gehen eine große Anzahl von Faktoren ein, bspw. die Materialien, die Art und Geometrie der Wälzkörper und der Laufbahnen, die Anzahl der Wälzkörper pro Reihe sowie die Anzahl der Reihen, etc. In jedem Fall kann anhand einzelner vorgegebener Größen sowie anhand der in der DIN-Norm 281 angegebenen Formeln, welche für Kugelreihen und Rollenreihen auch im speziellen Beschreibungsteil wiederholt sind, die dynamische axiale Tragzahl ermittelt und mit dem erfindungsgemäßen Referenzwert verglichen werden.

Ein nicht unwichtiges Merkmal ist, dass die ringförmigen Anschlußelemente eines erfindungsgemäßen Rotorblattlagers aus einem vergüteten Stahl bestehen sollten, der vergütet und angelassen sowie ggf. thermisch nachbehandelt wurde.

Ferner verdient ein weiteres Merkmal Beachtung, wonach die Oberflächen der Laufbahnen gehärtet sein sollten, mit einer Dicke der gehärteten Schicht von wenigstens etwa 1/20 des Durchmessers der betreffenden Wälzkörper. Erst dadurch ist sichergestellt, dass ein solches Lager auch trotz ständiger Verdrehung eine hohe Betriebsdauer erreicht. Außerdem sollten die Laufbahnen in Umfangsrichtung des Lagers keine Erhebungen oder Vertiefungen, also keine Abweichungen von der idealen Kreisform, aufweisen.

Die Erfindung sieht weiterhin vor, dass zur verdrehbaren Lagerung der Rotorblätter an der Rotornabe jeweils Drehverbindungen mit einer, zwei oder mehreren Reihen von Wälzkörpern verwendet werden, welche jeweils eine möglichst geringe Hertz'sche Pressung erfahren, welche länger halten können, sofern durch die sonstige Dimensionierung die Patentformel eingehalten ist. Besonders wichtig erscheint in diesem Zusammenhang auch, dass der Durchmesser der die axialen Kräfte und die Kippmomente übertragenden Wälzkörper einen Wert von 15 mm nicht unterschreiten sollte.

Die Erfindung empfiehlt überdies, dass zur verdrehbaren Lagerung der Rotorblätter an der Rotornabe jeweils Drehverbindungen mit mehreren Reihen von Wälzkörpern verwendet werden, wobei zur Übertragung von axialen Druckkräften, axialen Zugkräften und Radialkräften jeweils unterschiedliche Wälzkörperreihen verwendet werden. In diesem Fall empfiehlt es sich, eine Wälzkörperreihe zur Übertragung von Radialkräften in axialer Richtung zwischen zwei vorzugsweise identischen Wälzkörperreihen anzuordnen, welche der Übertragung von, axialen Druckkräften, einerseits, axialen Zugkräften andererseits sowie auch von Kippmomenten (Kombination von Zug- und Druckkräften in unterschiedlichen, vorzugsweise einander diametral gegenüberliegenden Bereichen des Lagerumfangs), dienen. Dadurch ist die axiale Belastbarkeit in Zug- und Druckrichtung, etwa gleich groß. Ferner wäre solchenfalls zu beachten, dass ein die äußeren beiden Wälzkörperreihen axial umgreifendes, Anschlußelement geteilt ausgeführt werden sollte, allerdings in einem Bereich zwischen der mittleren Wälzkörperreihe und einer der beiden äußeren Wälzkörperreihen, also gegenüber der mittleren Wälzkörperreihe in axialer Richtung zu einer Stirnseite des Lagers, vorzugsweise zur nähergelegenen hin, versetzt, so dass die Radialkräfte aufnehmende, mittlere Wälzkörperreihe nur mit einer der beiden Teilringe des umgreifenden Anschlußelements in Kontakt kommt, und zwar vorzugsweise hinsichtlich der gesamten Wälzkörperoberfläche, also bei rollenförmigen Wälzkörpern sowohl hinsichtlich ihrer Mantelflächen als auch hinsichtlich ihrer Stirnflächen.

Andererseits sollte darauf geachtet werden, dass zur verdrehbaren Lagerung der Rotorblätter an der Rotornabe jeweils Drehverbindungen zum Einsatz gelangen, deren axiale Tragkraft (in Druck- und/oder Zugrichtung sowie bei Kippmomenten) größer ist als ihre radiale Tragkraft. Es hat sich gezeigt, dass dies dem Anforderungsprofil an ein Rotorblattlager entspricht, denn dort überwiegt die axiale Belastung und Kippmomentbelastung deutlich gegenüber der radialen Belastung.

Ferner sollten zwei in Umfangsrichtung benachbarte Wälzkörper durch Distanzelemente voneinander getrennt sein oder durch Käfigelemente in gleichbleibenden Abständen gehalten werden, bspw. durch Käfigelemente mit einer gewölbten Grundfläche, die sich in bzw. entlang einer Zylindermantelfläche erstreckt. Indem eine Verlagerung der Kugeln entlang der Laufbahn vermieden wird, ist auch ein vorzeitiger Verschleiß unterbunden.

Die Erfindung sieht weiterhin vor, zur verdrehbaren Lagerung der Rotorblätter an den Rotornabe jeweils Drehverbindungen mit zwei ringförmigen, zueinander konzentrischen, gegeneinander verdrehbaren Elementen zu verwenden, wovon eines zum Anschluß an die Rotornabe dient und das andere zum Anschluß an ein Rotorblatt.

Die Erfindung läßt sich dahingehend weiterbilden, dass das radial außen liegende, ringförmige Anschlußelement mit der Rotornabe, das radial innen liegende, ringförmige Anschlußelement dagegen mit dem Rotorblatt verbunden ist, so dass sich die Wälzkörper radial außerhalb der Lochkreise der Verschraubung mit dem Rotorblatt befinden.

Weitere Vorteile ergeben sich dadurch, dass die in die selbe axiale Richtung weisenden Stirnseiten der beiden Anschlußelemente gegeneinander versetzt sind, so dass der mit dem Rotorblatt verbundene Ring nicht an der Rotornabe entlangschleifen kann.

Ein zwischen den beiden Anschlußelementen verbleibender, rundumlaufender, spaltförmiger Zwischenraum sollte an beiden Stirnseiten der Drehverbindung abgedichtet und mit einem Schmiermittel, insbesondere Schmierfett, gefüllt sein. Schmierfett hat gegenüber Öl den Vorteil, dass es leichter abzudichten ist. Das Schmiermittel wird vielmehr veranlaßt, ständig zwischen die Wälzkörper und deren Laufbahnen zu dringen.

Ferner kann mit einem oder beiden ringförmigen Anschlußelementen (je) ein Versteifungselement, bspw. ein Versteifungsring, verbunden oder verbindbar sein, vorzugsweise kraft- oder formschlüssig, bspw. angeformt oder angeschraubt, oder reibschlüssig eingeklemmt. Ein solcher Versteifungsring kann an einer Stirnseite, insbesondere einer Anschlußfläche, plan anliegen. Er muß nicht rotationssymmetrisch sein, sondern kann an die bevorzugte Kraftverteilung an einem Rotorblatt während dessen Anströmung angepaßt sein, bspw. mit einem elliptischen oder eiförmigen Verlauf des Querschnitts und/oder der Grundfläche. Auch kann ein solcher Versteifungsring Durchbrechungen aufweisen, um dessen Gewicht zu reduzieren. Die Asymmetrie kann auch derart ausgeführt sein, dass unterschiedliche Nachgiebigkeiten, der Anschlusskonstruktion durch unterschiedliche Dicken und/oder Konturen korrigiert werden können.

Die Verstellung der Rotorblätter zur Minimierung der Strukturlast und/oder zur Dämpfung von Schwingungen kann im Rahmen einer Steuerung und/oder Regelung erfolgen; vorzugsweise jedoch in Abhängigkeit von dem Signal wenigstens eines Sensors für eine (Stör-) Größe, welche ein Maß für Schwankungen des Turms darstellt oder dieselben nach sich zieht. Die Erfindung bevorzugt, einen übergeordneten Regelkreis zu verwenden, und davon Ansteuersignale für die Verstellmotoren der einzelnen Rotorblätter abzuleiten, bspw. anhand von hinterlegten Formeln, Tabellen, Kennlinien od. dgl. Dennoch ist es auch möglich, für jedes Rotorblatt eine eigene Steuerung oder einen eigenen Regelkreis zu verwenden. Ein solcher könnte einer übergeordneten Steuerung oder Regelung unterlagert sein, um bspw. die globale Vorgabe eines überlagerten Regelkreises für jedes Rotorblatt entsprechend einem gemäß deren Winkelversatz von 360°/b (mit b = Anzahl der Blätter des Rotors) verschobenen Drehwinkel in gegeneinander phasenverschobene Ansteuersignale umzuwandeln. Zumeist gibt es drei Rotorblätter, manchmal jedoch auch zwei oder vier oder mehr. Dabei würde sich innerhalb der Steuerung oder Regelung ein Ansteuersignal ergeben, welches jedenfalls nicht unerhebliche Spektralanteile mit der doppelten und/oder dreifachen, im Allgemeinen auch b-fachen Frequenz der Rotordrehzahl enthält, d.h., dass die Amplitude wenigstens eines dieser Spektralanteile ($2*n*2\pi/60$ bzw. $3*n*2\pi/60$ oder $b*n*2\pi/60$) größer ist als die Amplitude jedes anderen Spektralanteils.

Erfindungsgemäß wird als Eingangssignal für einen Steuer- oder Regelkreis zur Verstellung eines Rotorblattes wenigstens Sensor verwendet, der sich auf, an oder in der Windkraftanlage befindet:

In Betracht kommt hierfür bspw. ein im oberen Bereich des Turms der Windkraftanlage angeordneter Sensor, um Schwankungen der Gondel zu erkennen. Hierzu könnte ein in der Mitte des Turms an dessen Boden angeordneter, vertikal nach oben strahlender Laser verwendet werden, sowie lichtempfindliche Elemente unterhalb der Gondel, welche den Laserstrahl auffangen und anhand der Verschiebung des registrierten Lichtflecks die momentane Auslenkung der Gondel bestimmen können. Man könnte aber auch am oberen Turmende einen genau gehenden GPS-Sensor einbauen, der in der Lage ist, auf wenige Zentimeter genau die Position zu bestimmen (bspw. sog. differentielles GPS). Andere Sensortypen sind denkbar, bspw. Beschleunigungssensoren oder Verformungssensoren.

Ein anderes und/oder weiteres Eingangssignal wird von wenigstens einem mit der Hauptwelle des Rotors gekoppelten Lage- bzw. Winkelsensor abgegriffen werden zur Erfassung der absoluten und/oder relativen Drehstellung des Rotors. Damit kann die Lage jedes Rotorblattes ermittelt werden, um daraus dessen Einfluß auf die Störungen und/oder dessen potentielle, gegensteuernde Kraft zu ermitteln. Dabei ist zu bedenken, dass die auf ein sich drehendes Rotorblatt einwirkende Windkraft aufgrund von dessen Drehbewegung eine etwa lotrecht dazu gerichtete Kreiselkraft zur Folge hat, die also ihre Richtung in Abhängigkeit von der jeweiligen Position des Rotorblattes ständig ändert. Aus diesem Grund muß eine von einem Steuer- oder Regelkreis als erforderlich erachtete Gegenkraft zu jedem Zeitpunkt anders auf die einzelnen Rotorblätter aufgeteilt werden.

Auch das Signal wenigstens eines im oberen Bereich des Turms der Windkraftanlage angeordneten Sensors für die Windgeschwindigkeit und/oder -richtung wird im Rahmen einer erfindungsgemäßen Steuerung als Eingangsgröße verwendet werden, und zwar nach Art einer Störgrößenaufschaltung, weil daraus Erwartungswerte für asymmetrische Belastungen des Rotors samt aller Rotoren bestimmt bzw. geschätzt werden können.

Zur Minimierung der Strukturlast und/oder zur Dämpfung von Schwingungen ist aber auch das Signal wenigstens eines Sensors geeignet, der sich nicht auf, an oder in der Windkraftanlage befindet, sondern demgegenüber versetzt, beispielsweise auf, an oder in einer benachbarten Windkraftanlage. Insbesondere wenn derartige Sensoren entgegen der Windrichtung vor der zu bedämpfenden Windkraftanlage installiert sind, können sie dieser Informationen über zukünftige Änderungen der Windgeschwindigkeit liefern, die am Ort des Sensors schon eingetreten sind und dem dortigen Sensor bereits registriert wurden. Hierfür eignen sich auch Sensoren für Veränderungen der Lüftbewegungen, bspw. Infrarot- oder Lasersensoren.

Ein erfindungsgemäßes Verfahren zur Auslegung eines Rotorblattlagers für eine Windenergieanlage mit mehreren Rotorblättern, die unabhängig voneinander verstellbar sind und zur Minimierung der Strukturlast und/oder zur Dämpfung von Schwingungen auch dann verstellt werden, wenn eine gleichbleibende Windgeschwindigkeit $v_8$ dies nicht erfordert, zeichnet sich dadurch aus, dass als Rotorblattlager ein Wälzlager verwendet wird, das für eine hohe Überrollungszahl optimiert ist, indem seine axiale Tragzahl nach DIN ISO 281 wenigstens dem 1,5-fachen der axialen Tragzahl nach DIN ISO 281 einer Kugeldrehverbindung mit vergleichbaren Abmessungen entspricht, und/oder indem seine nach DIN ISO 281 berechnete Lebensdauer wenigstens dem 4-fachen der nach DIN ISO 281 berechneten Lebensdauer einer solchen Kugeldrehverbindung entspricht.

In diesem Zusammenhang soll der Begriff "Auslegung eines Rotorblattlagers" verstanden werden als Oberbegriff für die Konzeptionierung einer solchen Anlage, aber auch für die tatsächliche Ausführung einer solchen Anlage.

Weitere Merkmale, Eigenschaften, Vorteile und Wirkungen auf der Basis der Erfindung ergeben sich aus der folgenden Beschreibung bevorzugter Ausführungsform der Erfindung sowie anhand der Zeichnung. Hierbei zeigt:

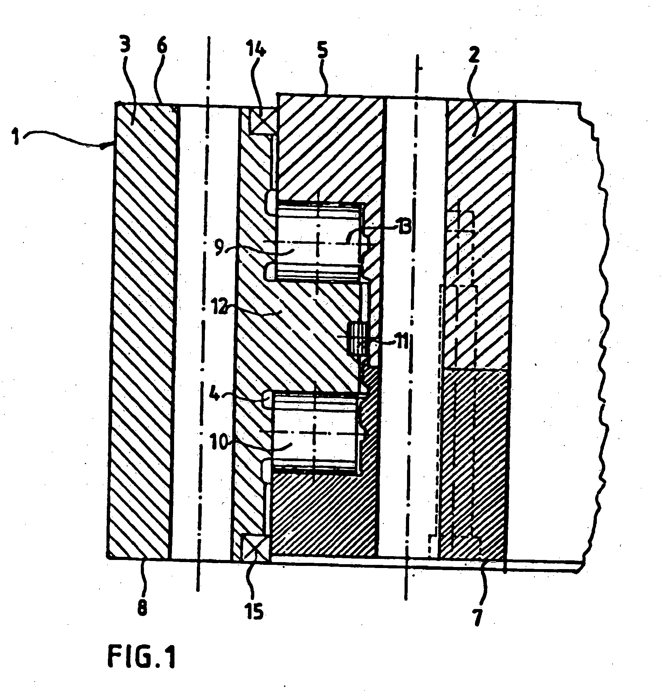

Fig. 1        ein nach den Grundsätzen der Erfindung ausgelegtes Lager für das Rotorblatt einer Windkraftanlage;

Fig. 2-5     verschiedene Belastungsfälle einer Windkraftanlage mit erfindungsgemäßen Rotorblattlagern, die sich durch die Erfindung minimieren lassen;

Fig. 6        eine zweireihige Kugeldrehverbindung mit Vierpunkt-Laufbahngeometrie in beiden Laufbahnen, wie sie im Stand der Technik als Rotorblattlager typischerweise bisher verwendet wurde und als Referenz-Lager für Vergleichsberechnungen dienen kann.

Eine wichtige Komponente für das erfindungsgemäße Konzept ist ein Rotorblattlager 1 mit einer hoch ausgelegten Überrollungszahl. Es besteht aus zwei Anschlußelementen 2, 3 in Form von zueinander konzentrischen Ringen. Beide Ringe 2, 3 weisen kranzförmig verteilte Bohrungen 4, 5 zum Hindurchstecken von Schrauben, Bolzen od. dgl. auf, welche an einem Rotorblatt einerseits, an der Rotornabe andererseits verankert, d.h. eingeschraubt werden. Vorzugsweise ist der Innenring 2 mit dem Rotorblatt, der Außenring 3 mit der Rotornabe verbunden. Zwischen den beiden ringförmigen Anschlußelementen 2, 3 befindet sich ein Spalt 4. Vorzugsweise bestehen die beiden ringförmigen Anschlußelemente 2, 3 aus einem vergüteten stahl, d.h., sie sind angelassen und thermisch behandelt.

Insbesondere liegen die oberen Stirnseiten 5, 6 der beiden ringförmigen Anschlußelemente 2, 3 nicht in einer gemeinsamen Ebene, sondern sind um bspw. 5 bis 15 mm gegeneinander versetzt. Dasselbe gilt vorzugsweise für die unteren Stirnseiten 7, 8 der beiden ringförmigen Anschlußelemente 2, 3. Die jeweils erhabene Stirnfläche 5, 8 wird mit dem angrenzenden Teil der Windkraftanlage - Rotorblatt oder Rotornabe - verschraubt. Die jeweils um einige Millimeter zurückversetzte Stirnfläche 6, 7 des jeweils anderen Rings 2, 3 kann daher nicht an dem damit nicht verbundenen Anlagenteil entlangstreifen.

Als Wälzkörper werden in dem dargestellten Rotorblattlager 1 beispielhaft Rollen 9, 10, 11 verwendet, was jedoch nicht zwingend ist. Beim dargestellten Beispiel gibt es insgesamt drei Reihen von rollenförmigen Wälzkörpern 9, 10, 11. Diese laufen an drei Laufbahnen an jeweils unterschiedlichen Seiten eines bundförmig vorspringenden Fortsatzes 12 von etwa rechteckigem Querschnitt an der dem Spalt 4 zugewandten Innenseite eines ringförmigen Anschlußelements 3 entlang. Die jeweils gegenüberliegenden Laufbahnen befinden sich an den drei Seiten einer in den gegenüberliegenden Ring 2 eingeformten Vertiefung von ebenfalls etwa rechteckigem Querschnitt. Die Laufbahnen sind oberflächengehärtet, entweder durch Induktiönshärten oder durch Flamhärten, und zwar bis zu einer Tiefe von wenigstens 1/20 des betreffenden Rollendurchmessers.

Die Rollen 9, 10 ober- und unterhalb des Bundes 12 haben radial zur Drehachse des Lagers 1 verlaufende Drehachsen 13, die dritte Reihe von Rollen 11 an der Mantelfläche des Bundes 12 dagegen zu der Drehachse des Lagers 1 parallele Drehachsen. Diese Rollen 11 haben kleinere Durchmesser als die Rollen 9, 10, bspw. nur den halben Durchmesser oder geringer, vorzugsweise nur ein Drittel des Durchmessers der Rollen 9, 10 oder weniger, insbesondere nur ein Viertel des Durchmessers der Rollen 9, 10 oder weniger, so dass die axiale (statische) Tragkraft des Lagers 1 größer ist als die radiale (statisch) übertragbare Kraft. Die Rollen 9, 10 ober- und unterhalb des Bundes haben einen Durchmesser von jeweils 15 mm oder mehr.

Um den Zusammenbau zu erleichtern, ist das dem Anschlußelement 3 mit dem angeformten Bund 12 gegenüberliegende Anschlußelement 2 entlang einer mittleren Ebene geteilt.

Der Spalt 4 ist an jeweils in den Bereichen zwischen den beiden oberen Stirnseiten 5, 6 sowie zwischen den beiden unteren Stirnseiten 7, 8 durch wenigstens je eine Dichtung 14, 15 abgedichtet und mit einem Schmiermittel, insbesondere Schmierfett, gefüllt. Vorzugsweise ist der Spalt 4 komplett mit Schmierfett gefüllt, welches evtl. sogar unter erhöhtem Druck eingepresst wird, um einen optimalen Schmierfilm zwischen den Wälzkörpern 9-11 einerseits und den Laufbahnen andererseits zu gewährleisten. Die Dichtungen 14, 15 sind vorzugsweise derart ausgebildet, dass ihre Dichtlippen durch einen inneren Überdruck im Spalt 4 fest an das jeweils gegenüberliegende Anschlußelement 2, 3 gepreßt werden.

Infolge der Werkstoffwahl und Vergütung der Laufbahnen sowie einer Abstimmung der Querschnittsfläche $F_Q$ beider, um Ausnehmungen bereinigter ringförmiger Anschlußelemente 2, 3, mit der Anzahl und den Abmessungen der Wälzkörper läßt sich die Tragzahl eines derart ausgebildeten Lagers 1 gegenüber herkömmlichen Lagern steigern, ohne das Gewicht nennenswert zu erhöhen, so dass es für den angestrebten Zweck als Rotorblattlager einsatzfähig ist.

Ein herkömmliches Rotorblattlager 31 ist in Fig. 6 zu Vergleichszwecken dargestellt. Man erkennt, dass es als zweireihige Kugeldrehverbindung mit zwei ringförmigen, zueinander konzentrischen Anschlußelementen 32, 33 und einem dazwischen liegenden Spalt 34 ausgebildet ist. Die oberen beiden Stirnseiten 35, 36 können geringfügig gegeneinander versetzt sein; die beiden unteren Stirnseiten 37, 38 sind ebenfalls geringfügig gegeneinander versetzt, und zwar gleichsinnig, so dass beide ringförmigen Anschlußelemente 32, 33 identische oder nahezu identische, axiale Höhen aufweisen.

In dem Spalt 34 zwischen den beiden Anschlußelementen 32, 33 gibt es zwei Reihen von kugelförmigen Wälzkörpern 39, 40 identischen Durchmessers. Diese werden von Käfigen 41, 42 in äquidistanten Abständen gehalten.

Im Bereich beider Mündungen 43 des Spaltes 34 ist je eine Dichtung 44, 45 vorgesehen.

Wenn man den Spalt 43, die Anschlußbohrungen 46, 47 sowie ggf. vorhandene, weitere Ausnehmungen im Lagerquerschnitt gedanklich ausfüllt, derart, dass die Berandungen der Ausnehmungen auf möglichst glattem Weg verschlossen werden, so ergibt sich ein Flächenquerschnitt, dessen Flächenmaß mit $F_Q$ bezeichnet werden soll. Da die beiden ringförmigen Anschlußelemente 32, 33 jeweils gleiche Höhe h haben, ergibt sich das Maß $F_Q$ mit recht guter Näherung aus der Multiplikation dieser Höhe h mit der Differenz zwischen dem Außenradius $r_a$ des Außenrings 33 minus dem Innenradius $r_i$ des Innenrings 32:

$$\acute{F}_Q = (r_a - r_i) * h.$$

Da die beiden Ringe 32, 33 etwa die gleiche radiale Dicke haben, gilt für den Durchmesser $D_{pw}$ der Kreislinie entlang der Mittelpunkte aller Wälzkörper 39, 40 ebenfalls mit sehr guter Näherung:

$$D_{pw} = r_a + r_i = 2 * R_{F,SP}.$$

Schließlich kann man in Fig. 6 ablesen, dass der Durchmesser Dw eines kugelförmigen Wälzkörpers 39, 40 etwa 3/10 der Wurzel aus dem Flächenquerschnitt entspricht:

$$D_w = 0{,}3 * F_Q^{0,5}.$$

Nach DIN ISO 281, Seite 9, Punkt 6.1.1, Punkt 6.1.2- und Tbl. 4 gilt bei einem einreihigen Vierpunktkugellager für $D_W$ (Kugeldurchmesser in Millimeter) > 25,4 mm und á (Nenn-Berührungswinkel eines Lagers in Winkelgraden) ⑤ 90°:

$$C_a = 3,647 * b_m * f_C * (\cos \alpha)^{0,7} * \tan \alpha * Z^{2/3} * D_W^{1,4},$$

wobei

$C_a$ =   dynamische axiale Tragzahl in Newton;
$b_m$ =   1,3 (von Lagerart und -ausführung abhängiger Tragzahlbeiwert für Lager mit heute üblicherweise verwendetem Werkstoff und üblicher Herstellerqualität);
$f_c$ =   Faktor, der von der Geometrie, der Herstellgenauigkeit und dem Werkstoff der Lagerteile abhängt;
$Z$ =   Anzahl der Kugeln, die Lasten in derselben Richtung übertragen.

Für ein einreihiges Vierpunktkugellager mit $D_W$ (Kugeldurchmesser in Millimeter) $\leq$ 25,4 mm und $\alpha$ (Nenn-Berührungswinkel eines Lagers in Winkelgraden) ⑤ 90° gälte lt. DIN-Norm dagegen:

$$C_a = b_m * f_C * (\cos \alpha)^{0,7} * \tan \alpha * Z^{2/3} * D_W^{1,8}.$$

Dieser Fall trifft allerdings bei Rotorblattlagern für Windkraftanlagen hoher Leistung so gut wie niemals zu. Die Patentformel umfaßt jedoch auch diesen Fall, da durch die d-Funktion die beiden Funktionen vereinheitlicht wurden.
Lt. DIN-Norm gilt für den hier betrachteten Fall $b_m$ = 1,3.
Ferner ist zu beachten; dass sich bei Rotorblattlagern für große Windkraftanlagen mit einem Teilkreisdurchmesser von 1.500 mm oder darüber für den Term

$$x = (D_W * \cos \alpha) / D_{pw}$$

typischerweise Werte von 0,01 bis 0,03 ergeben, denn bei $D_W$ = 40 mm, a = 45° und $D_{pw} \geq$ 1.500 mm erhält man bspw. 0,019, ein Wert, der infolge einer Korrelation zwischen $D_w$ und $D_{pw}$ sich nur wenig ändert. Es ist daher möglich, für die Zwecke der vorliegende Erfindung für $f_c$ eine Interpolationsformel anzugeben, welche in dem Bereich von x = ($D_w$ * cos a) / $D_{pw}$ zwischen 0,01 und 0,03 die Zwischenwerte liefert, nämlich:

$$f_C = - 15.500 * x^2 + 1.425 * x + 29,4$$

Man kann leicht nachprüfen, dass diese Formel folgende Werte liefert:

$$x = 0,01 \rightarrow f_C = 42,1$$

$$x = 0,02 \rightarrow f_C = 51,7$$

$$x = 0,03 \rightarrow f_C = 58,2,$$

nämlich genau die Werte für $f_c$ aus Tabelle 4 von DIN 281 bei $\alpha$ = 45°.
Mit den obigen Vereinbarungen über das Referenz-Kugellager, bspw. $D_w$ = 0,3 * $F_Q^{0,5}$ und $D_{PW}$ = 2 * $R_{F,SP}$, läßt sich x vereinfachen zu:

$$x = 0,3 * F_Q^{0,5} * 0,7 / 2 * R_{F,SP} =$$
$$= 0,105 * F_Q^{0,5} / R_{F,SP}.$$

Damit ergibt sich für $f_C$:

$$f_C = -170{,}89 * F_Q / R_{F{,}SP}^2 + 149{,}63 * F_Q^{0,5} / R_{F{,}SP} + 29{,}4.$$

Schließlich ist zu berücksichtigen, dass nach DIN 281 die Tragzahlen mehrerer Wälzlagerreihen nicht einfach addiert werden dürfen. Vielmehr ist bei Axiallagern mit zwei oder mehr Kugelreihen die (globale) dynamische Tragzahl:

$$C_{a{,}ges{,}ref} = (Z_1 + Z_2 + \cdots + Z_n) * [(Z_1/C_{a1})^{10/3} + (Z_2/C_{a2})^{10/3} + \cdots + (Z_n/C_{an})^{10/3}]^{-3/10},$$

wobei die Tragzahlen $C_{a1}$, $C_{a2}$ ... $C_{an}$ für die Reihen mit $Z_1$, $Z_2$ ... $Z_n$ Kugeln nach der obigen Gleichung für einreihige Kugellager berechnet werden.

Da bei dem Kugellager nach Fig. 6 zwei identische Kugellagerreihen vorliegen, also $Z_1 = Z_2 = Z$ und $C_{a1} = C_{a2} = Ca$ gilt, läßt sich diese komplexe Formel auflösen zu:

$$C_{a{,}ref} = C_{a{,}ges{,}ref} = 2^{7/10} * C_a.$$

Insgesamt ergibt sich demnach für $C_{a{,}ref}$ nach einigen Umrechnungen (wobei für das Referenzlager t = 1,2 angenommen werden kann:

$$C_{a{,}ref} = 2^{7/10} * 3{,}647^{\tilde{a}} * 1{,}3 * [-170{,}89 * F_Q / R_{F{,}SP}^2 + 149{,}63 * F_Q^{0,5} / R_{F{,}SP} + 29{,}4] *$$

$$* 0{,}7846 * (5{,}55 * R_{F{,}SP} * F_Q^{-1/2})^{2/3} * [0{,}3 * F_Q^{0,5}]^{(1,8-0,4*\tilde{a})} =$$

$$= 5{,}138 * 3{,}647^{\tilde{a}} * [0{,}3 * F_Q^{0,5}]^{(1,8-0,4*\tilde{a})} * (R_{F{,}SP}^2 / F_Q)^{1/3} *$$

$$* [-170{,}89 * F_Q / R_{F{,}SP}^2 + 149{,}63 * (F_Q / R_{F{,}SP}^2)^{0,5} + 29{,}4]$$

Dieser Wert hängt nur von $F_Q$, $R_{F{,}SP}$ und $\delta$ ab und kann daher vom Fachmann leicht berechnet werden, um die Eignung seines Lagers als Rotorblattlager für eine leistungsstarke Windkraftanlage mit beständiger Verstellung der Rotorblattwinkel zu überprüfen, wobei der obige Wert für $C_{a{,}ref}$ wenigstens um das 1,5-fache überschritten werden sollte.

Bei einer typischen Auslegung eines Rotorblattlagers für eine Windkraftanlage mit einer Nennleistung von etwa 3 MW als zweireihiges Kugellager ergäbe sich dadurch bspw. als Referenzwert eine axiale dynamische Tragzahl $C_{a{,}ref}$ = 2.031 kN; da dieser Wert sodann um wenigstens das 1,5-face zu überschreiten wäre, müßte ein geeignetes Lager bspw. einen $C_{a{,}ges}$-Wert von wenigstens 3.046,5 kN aufweisen.

Dieser Wert kann vom Fachmann auf verschiedenen Wegen erreicht werden:

Bspw. könnte der Fachmann die Anzahl der Kugeln erhöhen und/oder den Kugelradius verändern, sofern dies die Stabilität des Lagers zuläßt, oder er ersetzt ein oder mehrere Kugelreihen durch andere Wälzkörper; auch unterliegt die geometrische Anordnung der einzelnen -Kugelreihen und/oder sonstigen Wälzkörperreihen keiner Einschränkung.

Falls sich der Fachmann für eine oder mehrere Reihen aus Rollen als Wälzlagern entscheidet, so kann er nach DIN ISO 281, Seite 12, Punkt 8.1.1.1, Tbl. 9 sowie Seite 13, Tbl. 10 bei einem Rollenlager für á = 90° die dynamische axiale Tragzahl $C_a$ der betreffenden Rollenreihe wie folgt berechnen:

$$C_a = b_m * f_C * L_{we}^{7/9} Z^{3/4} * D_{we}^{29/27},$$

wobei

$L_{we}$ = in die Tragzahlberechnung einzusetzende Rollenlänge in Millimeter;
$D_{we}$= in die Tragzahlberechnung einzusetzender Rollendurchmesser in Millimeter;
$Z$ = Anzahl der Rollen.

Bei Axiallagern mit zwei oder mehr Rollenreihen ist die (globale) dynamische Tragzahl:

$$C_a = (Z_1{}^*L_{we1} + \cdots + Z_n{}^*L_{wen}) * \{[(Z_1{}^*L_{we1})/C_{a1}]^{9/2} + \cdots + [(Z_n{}^*L_{wen})/C_{an}]^{9/2}\}^{-2/9},$$

wobei die Tragzahlen $C_{a1}$, $C_{a2}$ ... $C_{an}$ für die Reihen mit $Z_1$, $Z_2$ ... $Z_n$ Rollen nach der obigen Gleichung für einreihige Rollenlager berechnet werden.

Man kann daraus entnehmen, dass die Tragzahl ganz entscheidend von den Größen Rollenlänge, Rollendurchmesser und Rollenanzahl abhängt, so dass diese Größen wiederum nach der obigen Vergleichsformel ermittelt werden müssen, um tatsächlich zu einem als Rotorblattlager geeigneten Lager zu gelangen.

Bei einer erfindungsgemäßen Auslegung eines Rotorblattlagers 1 für eine Windkraftanlage mit einer Nennleistung von etwa 3 MW als dreireihiges Rollenlager, wobei hier vereinfachend nur die axiale Tragfahigkeit und also auch nur die axial tragenden Wälzkörperreihen betrachtet werden, lassen sich durchaus axiale dynamische Tragzahlen $C_{aRollenlager}$ von mehr als 4.000 kN erreichen, so dass die Patentformel erfüllt ist.

Für die nominelle Lebensdauer $L_{10}$ eines Axial-Kugellagers gilt gemäß DIN ISO 281, Seite 11, Punkt 6.3.1:

$$L_{10,ref} = (C_{a,ref}/P_a)^3;$$

wobei

$P_a$ = dynamische äquivalente Axiallast in Newton.

Für die nominelle Lebensdauer $L_{10}$ eines reinen Axial-Rollenlagers gilt gemäß DIN ISO 281, Seite 14, Punkt 8.3.1:

$$L_{10} = (C_{a,ges}/P_a)^{10/3};$$

Setzt man näherungsweise für 10/3 = 3,333 ≃ 3, und nimmt man ferner an - was im Normalfall erfüllt ist - dass die Werte $P_a$ bei einer zweireihigen Kugeldrehverbindung mit $\alpha$ = 45° und beim axialen Rollenlager gleich groß sind, so folgt für das Lebensdauerverhältnis $V_L$ = $L_{10}$ / $L_{10,ref}$:

$$V_L = (C_{a,ges} / C_{a,ref})^3$$

Da erfindungsgemäß $C_{a,ges} \geq 1.5 * C_{a,ref}$, gilt bei erfindungsgemäßer Bemessung des Lagers:

$$V_L \geq (1,5)^3 = 3,375,$$

d.h., die zu erwartende Lebensdauer entspricht mindestens dem mehr als dreifachen der eines herkömmlichen Rotorblattlagers; sie wird durch geringfügige Steigerung von $C_{a,ges}$ rasch größer und kann durchaus Werte von mehr als dem Zehnfachen eines herkömmlichen Rotorblattlagers erreichen.

Dank der solchermaßen entsprechend $V_L$ gesteigerten Überrollungszahl des verwendeten Rotorblattlagers 1 lassen sich damit neue Steuerungs- und/oder Regelungskonzepte realisieren, um die strukturelle Belastung des Turms einer solchermaßen ausgerüsteten Windkraftanlage zu reduzieren oder gar zu minimieren:

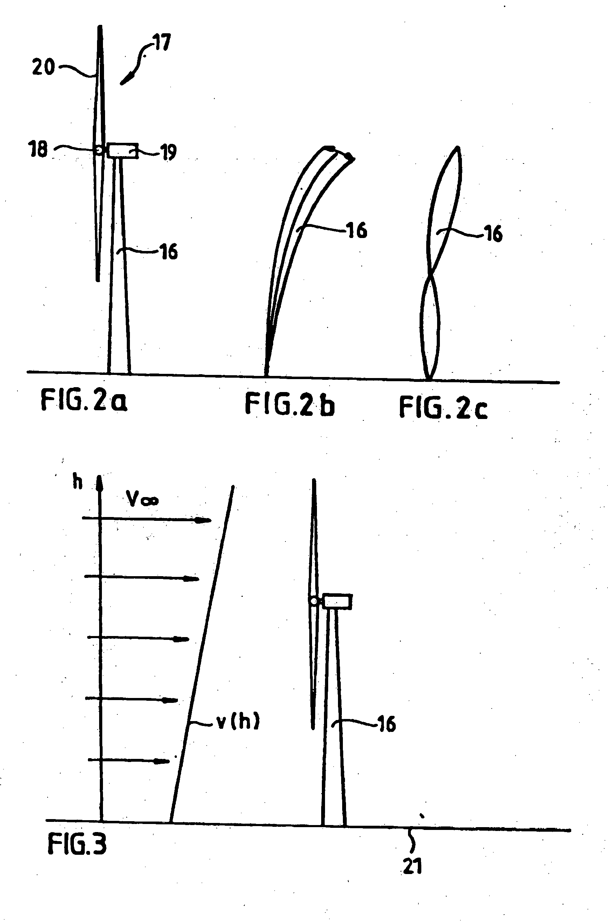

Wie Fig. 2 zu entnehmen ist, ist der Turm 16 einer Windkraftanlage 17 nicht völlig steif, sondern kann - bspw. angeregt durch Windböen - zu Schwankungen (vgl. Fig. 2b) und/oder zu Schwingungen bzw. Durchbiegungen (vgl. Fig. 2c) angeregt werden. Bspw. werden Schwankungen durch variierenden Winddruck am Rotor 18 angeregt, welche sich von dort auf die Gondel 19 übertragen; Schwingungen bzw. Durchbiegungen werden bspw. durch ein am Rotor angreifendes Biegemoment ausgelöst. Durch ein oder mehrere Positionssensoren im und/oder am Turm 16 können diese Schwankungen und/oder Schwingungen gemessen und damit erkannt werden.

Als Gegenmaßnahme können die Anstellwinkel eines, mehrerer oder aller Rotorblätter 20 derart verstellt, werden, dass sie durch Zusammenspiel mit dem Wind dadurch veränderte Windkräfte auf den Rotor 18 und damit auf die Gondel 19 ausüben, um den Schwankungen und/oder Schwingungen entgegenzuwirken.

Erfindungsgemäß wird dabei außerdem der jeweilige Rotorblattdrehwinkel um die Rotor- bzw. Hauptachse berücksichtigt; weswegen an der Rotor bzw. Hauptwelle auch ein Lage- bzw. Winkelsensor angeordnet sein sollte, damit die Winkelstellung aller Rotorblätter zu jedem Zeitpunkt bekannt ist.

Neben einer derartigen Regelung gibt es auch verschiedene Steuerungsprinzipien, um - ggf. auch ohne Kenntnis der jeweiligen Schwankungs- und/oder Schwingungsamplitude(n) - die strukturelle-Belastung des Turms 16 der Windkraftanlage 17 minimieren zu können:

Wie Fig. 3 zeigt, ist die Windgeschwindigkeit v normalerweise nicht überall konstant, sondern ist eine Funktion v(h) der Höhe h über dem Erdboden 21 und nimmt zu größeren Höhen h hin zu etwa bis zu einem Wert $v_\infty$ in großer Höhe. Daher erfährt ein Rotorblatt 20 im oberen Scheitelpunkt seiner Kreisbewegung um die Rotorhauptachse 18 eine stärkere Windkraft als im unteren Scheitelpunkt seiner Bahn. Die davon ausgelösten Schwankungen und/oder Schwingungen des Turms 16 können empirisch ermittelt und als Formel, Kennlinie oder Tabelle in Abhängigkeit von der Windgeschwindigkeit $v_\infty$ in großer Höhe hinterlegt sein, so dass die Anstellwinkel der Rotorblätter 20 entsprechend ihrer Umlaufperiode periodisch verstellt werden, um die damit verbundenen Schwankungen in der Windkraft zu minimieren. Die jeweils aktuelle Windgeschwindigkeit $v_8$ in großer Höhe wird bspw. mit einem Sensor für die Windstärke ermittelt, der sich vorzugsweise oben auf der Gondel 19 der Windkraftanlage 17 befindet.

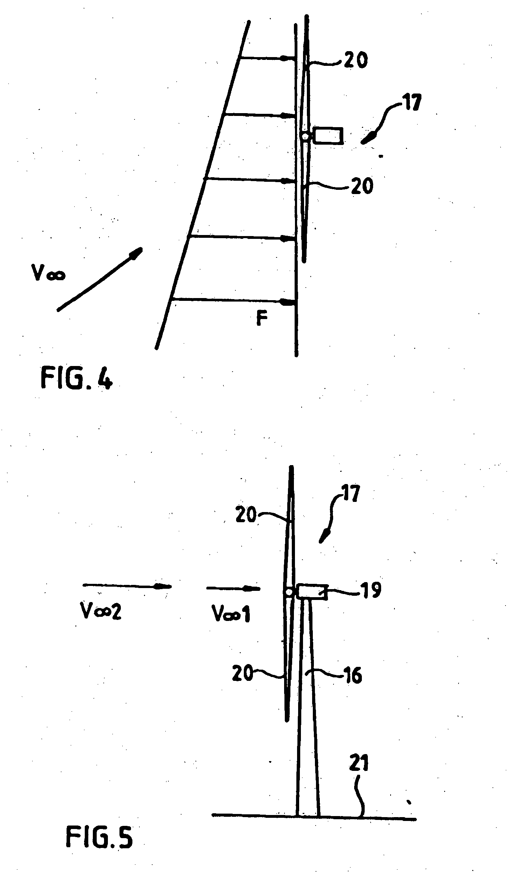

Andererseits kann der Turm 16 einer Windkraftanlage 17 auch zu Dreh- oder Torsionsschwingungen um seine vertikale Achse angeregt werden. Dies wird vor allem dann ausgelöst, wenn der Wind nicht beständig aus der selben Richtung bläst, sondern mehr oder weniger schnell dreht, wie in Fig. 4 angedeutet, einer Draufsicht auf eine Windkraftanlage 17. Dort hat sich der Wind - bspw. im Rahmen einer Böe - vorübergehend gedreht und trifft nun nicht mehr lotrecht auf die Rotorblattebene, bzw. ist nicht mehr parallel zu der Richtung der Rotorhauptachse. Der Effekt ist, dass die Windkraft, welche ein Rotorblatt 20 erfährt, nicht nur von dessen Höhe, sondern auch von seiner Ausrichtung zu der geänderten Windrichtung abhängt: Weist ein Rotorblatt 20 gerade entgegen der Windrichtung $v_\infty$, wie das in Fig. 4 unten dargestellte Rotorblatt 20, so hat es eine höhere Windangriffsfläche und erfährt daher eine größere Windkraft F als ein etwa gegenüberliegendes Rotorblatt, 20, welches demgegenüber teilweise abgeschattet ist, bspw. auch durch die Rotornabe 18 der Windkraftanlage 17.

Auch solchen Torsionsschwingungen des Turms 16 kann durch eine geeignete (antizyklische) Steuerung der Anstellwinkel der Rotorblätter 20 entgegengewirkt werden. Die jeweils aktuelle Windrichtung wird bspw. mit einem Sensor für die Windrichtung ermittelt, der sich vorzugsweise oben auf der Gondel 19 der Windkraftanlage 17 befindet. Das erfindungsgemäße Steuerungs- und/oder Regelungskonzept profitiert dabei von dem Umstand, dass das bei einer Verstellung des Rotorblattanstellwinkels zu überwindende Trägheitsmoment eines Rotorblattes 20 weitaus geringer ist als bspw. das bei einem Verfahren der Gondel 19 in eine andere Windrichtung zu überwindende Trägheitsmoment der Einheit aus Gondel 19 und Rotor 18 samt Rotorblättern 20.

In Fig. 4 ist ein noch anderer Fall gezeigt, nämlich ein böiger Wind, der sich nicht hinsichtlich seiner Richtung, sondern seiner Stärke ändert, bspw. von $v_{\infty 1}$ auf $v_{\infty 2}$. Dies ist mittels Sensoren detektiert, welche sich nicht direkt an der Windkraftanlage 17 befinden, sondern in deren Umgebung, bei Windparks bspw. auf benachbarten Windkraftanlagen 17, Masten, Gebäuden, etc. Indem diese Windkraftanlagen 17 miteinander vernetzt werden, kann die betrachtete Windkraftanlage 17 bereits vor Eintreffen einer Windbö von diesem Ereignis erfahren und die Anstellwinkel der Rotorblätter 20 derart verstellen, dass sie bei Eintreffen der Bö den damit normalerweise verbundenen, plötzlichen Anstieg der Windkraft F mildern oder gar kompensieren und damit von dem Turm 16 der Windkraftanlage 17 ganz oder teilweise abhalten.

Wie man sieht, lassen sich durch die erfindungsgemäße Auslegung der Rotorblattlager 1 eine Vielzahl von strukturellen Belastungen von dem Turm 16 der Windkraftanlage fernhalten, so dass dieser weit weniger schwankt und schwingt als ohne eine entsprechende Maßnahme. Die Betriebsdauer einer Windkraftanlage 17 kann dadurch erheblich gesteigert werden.

**Patentansprüche**

1. Verfahren zur Auslegung einer Windenergieanlage (17), deren elektrische Nennleistung $P_{W,Nenn}$ gleich oder größer ist als 1,5 MW, und/oder deren Rotordurchmesser gleich oder größer ist als 70 m, und/oder die wenigstens ein Rotorblattlager (1) aufweist mit einem Laufkreisdurchmesser $D_{pw}$ von 1.500 mm oder darüber, mit mehreren Rotorblättern (20), die unabhängig voneinander verstellbar sind und zur Minimierung der statischen und/oder dynamischen Strukturlast und/oder zur Dämpfung von Schwingungen und/oder zur Kompensation störender Kräfte und Momente, bspw. durch Erzeugung von Gegenkräften, und die auch dann verstellt werden, wenn eine gleichbleibende Windgeschwindigkeit $v_\infty$ dies nicht erfordert, wobei zur Lagerung der Rotorblätter (20) jeweils Wälzlager-Drehverbindungen (1) verwendet werden mit zwei ringförmigen, zueinander konzentrischen, gegeneinander verdrehbaren Elementen (2,3) zum Anschluß an die Rotornabe (18) einerseits sowie zum Anschluß an ein Rotorblatt (20) andererseits, wobei zwischen den beiden Anschlußelementen (2,3) ein rundumlaufender, spaltförmiger Zwischenraum (4) vorgesehen wird, der an beiden Stirnseiten (5,6;7,8) der Drehverbindung (1) abgedichtet (14,15) und mit einem Schmiermittel, insbesondere Schmierfett, gefüllt wird, mit einer Fläche $F_Q$ des von Ausnehmungen befreiten gesamten Lagerringquerschnitts eines Rotorblattlagers (1) und mit einem Radius $R_{F,SP}$ des Flächenschwerpunkts der Querschnittsfläche des Rotorblattlagers (1), sowie mit einem Bauvolumen $V = F_Q * 2 * \pi * R_{F,SP}$, berechnet aus der Fläche $F_Q$ des von Ausnehmungen bereinigten Lagerquerschnitts mal dem Umfang $2 * \pi * R_{F,SP}$ am Flächenschwerpunkt, und mit einer nach DIN ISO 281 bestimmten, dynamischen axialen Tragzahl $C_{a,ges}$ aller an der Kraftübertragung in einer axialen Richtung beteiligten Reihen ($\mu$) eines verwendeten Wälzlagers (1), **dadurch gekennzeichnet, dass**

a) im Rahmen der Rotorblatt-Wälzlager (1) für die an der Kraftübertragung in axialer Richtung beteiligten Reihen von Wälzkörpern (9,10) oberflächengehärtete Laufbahnen ohne Erhebungen und ohne Vertiefungen vorgesehen werden, wobei die Dicke $d_H$ der oberflächengehärteten Laufbahnschicht wenigstens 1/20 des Wälzkörperdurchmessers $D_W$ entspricht: $d_H \geq 0,05 * D_W$, wobei

b) die gesamte, nach DIN ISO 281 bestimmte, dynamische axiale Tragzahl $C_{a,ges}$ aller an der Kraftübertragung in einer axialen Richtung beteiligten Reihen ($\mu$) eines verwendeten Wälzlagers (1) nach DIN ISO 281 folgendem Zusammenhang genügt:

$$C_{a,ges} \geq 0{,}89268 * [-170{,}89 * F_Q * R_{F,SP}^{-4/3} + 149{,}63 * F_Q^{0,5} * R_{F,SP}^{-1/3} + 29{,}4 * R_{F,SP}^{2/3}] * F_Q^{17/30},$$

falls $F_Q \leq 71{,}6844\ cm^2$; sowie

$$C_{a,ges} \geq 5{,}26956 * [-170{,}89 * F_Q * R_{F,SP}^{-4/3} + 149{,}63 * F_Q^{0,5} * R_{F,SP}^{-1/3} + 29{,}4 * R_{F,SP}^{2/3}] * F_Q^{11/30},$$

falls $F_Q > 71{,}6844\ cm^2$,

c) wobei ferner die in die selbe axiale Richtung weisenden Stirnseiten (5-8) der beiden Anschlusselemente (2,3) gegeneinander versetzt angeordnet werden, wobei eine erhabene Stirnfläche (5,8) mit dem. Rotorblatt, die andere mit der Rotornabe verschraubt ist,

d) und wobei ferner zur Minimierung der Strukturlast und/oder zur Dämpfung von Schwingungen eine Steuerung oder Regelung für eine Verstellung der Rotorblätter (20) vorgesehen wird, als deren Eingangsgröße das Signal wenigstens eines Sensors verwendet wird, der sich auf, an oder in der Windkraftanlage befindet, nämlich das Signal wenigstens eines mit der Hauptwelle des Rotors (18) gekoppelten Lage- bzw. Winkelsensors, und das Signal wenigstens eines im oberen Bereich des Turms (16) der Windkraftanlage (17) angeordneten Sensors für die Windgeschwindigkeit,

e) und wobei schließlich eine Vernetzung der Windenergieanlage (17) mit benachbarten Windkraftanlagen vorgesehen wird, so dass die Windenergieanlage (17) über Sensoren, welche sich nicht direkt an der Windenergieanlage (17) befinden, sondern auf benachbarten Windkraftanlagen, bereits vor Eintreffen einer Windbö von diesem Ereignis erfährt, um durch eine geeignete Verstellung der Anstellwinkel der Rotorblätter (20) einen mit dem Eintreffen der Bö normalerweise verbundenen, plötzlichen Anstieg der Windkraft von dem Turm (16) der Windenergieanlage (17) ganz oder teilweise abzuhalten.

2. Verfahren nach Anspruch 1, **dadurch gekennzeichnet, dass** die Verstellung der Rotorblätter (20) zur Minimierung der Strukturlast und/oder zur Dämpfung von Schwingungen im Rahmen einer Steuerung und/oder Regelung erfolgt, vorzugsweise im Rahmen einer übergeordneten Steuerung und/oder Regelung sowie vorzugsweise mehrerer unterlagerter Steuerungen und/oder Regelungen für die einzelnen Rotorblätter (20).

3. Verfahren nach Anspruch 1, **dadurch gekennzeichnet, dass** sich in einer Steuerung oder Regelung während des Betriebs zumindest Schwingungen mit folgenden Spektralanteilen einstellen:

$$M_1 = \cos [(2\pi/60)\ 2nt]$$

und/oder

$$M_2 = \sin\left[(2\pi/60)\,3nt\right];$$

wobei

n = Drehzahl des Rotors
t = Zeit.

4. Verfahren nach einem der vorhergehenden Ansprüche, **dadurch gekennzeichnet, dass** die beiden Anschlußelemente (2,3) der zur verdrehbaren Lagerung der Rotorblätter (20) an der Rotornabe (18) verwendeten Drehverbindungen (1) jeweils aus einem Stahl bestehen, der vergütet und angelassen wurde sowie ggf. anschließend thermisch behandelt.

5. Verfahren nach einem der vorhergehenden Ansprüche, **dadurch gekennzeichnet, dass** die oberflächengehärteten Laufbahnen induktionsgehärtet oder flammgehärtet wurden, wobei vorzugsweise die Dicke $d_H$ der oberflächengehärteten Laufbahn-Schicht wenigstens 1/16 des betreffenden Wälzkörperdurchmessers $D_w$ entspricht:

$$d_H \geq 0{,}06 * D_w.$$

6. Verfahren nach einem der vorhergehenden Ansprüche, **dadurch gekennzeichnet, dass** zur verdrehbaren Lagerung der Rotorblätter (20) an der Rotornabe (18) jeweils Wälzlager (1) mit wenigstens einer Reihe von Wälzkörpern (9-11) verwendet werden, wobei die Wälzkörper (9-11) wenigstens einer Reihe mit ihren Laufbahnen jeweils linienförmige Berührungsbereiche ausbilden; vorzugsweise Wälzlager (1) mit zwei oder mehr Reihen von Wälzkörpern (9-11) verwendet werden, wobei die Wälzkörper (9-11) wenigstens zweier Reihen mit ihren Laufbahnen jeweils linienförmige Berührungsbereiche ausbilden.

7. Verfahren nach einem der vorhergehenden Ansprüche, **dadurch gekennzeichnet, dass** zur verdrehbaren Lagerung der Rotorblätter (20) an der Rotornabe (18) jeweils Drehverbindungen (1) verwendet werden, deren axiale Tragkraft $F_a$ größer ist als ihre radiale Tragkraft $F_r$:

$$F_a > F_r,$$

insbesondere um einen Faktor von wenigstens 1,25:

$$F_a/F_r > 1{,}25.$$

## Claims

1. Method for dimensioning a wind energy installation (17) whose rated electrical power $P_{W,rated}$ is equal to or greater than 1.5 MW, and/or whose rotor diameter is equal to or greater than 70 m, and/or which has at least one rotor blade bearing (1) with a orbit diameter $D_{pw}$ of 1,500 mm or more, with several rotor blades (20), which are adjustable independently from each other, and which, to minimize static or dynamic structural load and/or to damp vibrations and/or to compensate for interference forces and moments, as by generating counterforces, are adjusted even when a constant wind velocity $v_\infty$ does not warrant it, wherein for the bearing of the rotor blades (20), there are used rolling slewing bearings (1) comprising two annular, mutually concentric elements (2, 3) rotatable relative to each other, for connection to a rotor hub (18) on the one hand, and for connection to a rotor blade (20) on the other hand, wherein provided between both connecting elements (2, 3) is a fully circumferential, slot-shaped clearance (4) that is sealed (14, 15) on both end faces (5, 6; 7, 8) of said bearing (1) and is filled with a lubricant, with a surface area $F_Q$ of the entire bearing-ring cross-section, without voids, and with a radius $R_{F,SP}$ of the centroid of the cross-sectional area, with a volume $V = F_Q * 2 * \pi * R_{F,SP}$, calculated from the surface area $F_Q$ of the entire bearing-ring cross-section, without voids, multiplied with the perimeter $2 * \pi * R_{F,SP}$ at the centroid of the cross-sectional area, and with a total dynamic axial load rating $C_{a,total}$, defined according to DIN ISO 281, of all rows ($\mu$) of a used bearing (1), which participate in a force transmission in an axial direction, **characterized in that**

a) in the context of said rotor blade bearings (1), for those rows of rolling elements (9, 10), which participate at the force transfer in axial direction, surface-hardened raceways without any prominences or depressions are provided, wherein the thickness $d_H$ of the surface-hardened raceway layer is equal to at least $1/20^{th}$ of the particular rolling element diameter $D_W$: $d_H \geq 0.05 * D_W$, wherein
b) the total dynamic axial load rating $C_{a,total}$, defined according to DIN ISO 281, of all rows ($\mu$) of a utilized rolling bearing (1) according to DIN ISO 281, which participate in force transmission in an axial direction, matches the following relationship:

$$C_{a,ges} \geq 0.89268 * [-170.89 * F_Q * R_{F,SP}^{-4/3} + 149.63 * F_Q^{0,5} * R_{F,SP}^{-1/3} + 29.4 * R_{F,SP}^{2/3}] * F_Q^{17/30},$$

if $F_Q \leq 71.6844$ cm$^2$; and

$$C_{a,ges} \geq 5.26956 * [-170.89 * F_Q * R_{F,SP}^{-4/3} + 149.63 * F_Q^{0,5} * R_{F,SP}^{-1/3} + 29.4 * R_{F,SP}^{2/3}] * F_Q^{11/30},$$

if $F_Q > 71.6844$ cm$^2$;
c) wherein the front faces (5-8) of both connection elements (2,3) facing into the same axial direction are disposed offset from each other, whereby one elevated front face (5,8) is screwed to the rotor blade, and the other one to the rotor hub,
d) and wherein, for minimizing the structural load and/or for damping of vibrations, there is provided an open- or closed-loop control system for adjusting said rotor blades (20), which uses as an input variable a signal from at least one sensor disposed on, at or in said wind power installation, namely the signal of at least one position or angle sensor coupled to the main shaft of the rotor (18), and the signal of at least one sensor for the wind velocity disposed in the upper region of the tower (16) of the wind power installation (17),
e) and wherein there is provided an interconnection between the wind power installation (17) and adjacent wind power installations, so that the wind power installation (17) can learn via sensors, which are not disposed at said wind power installation (17), but at adjacent wind power installations, from a squall even before the latter hits, to adjust the pitch of the rotor blades (20) in such a way that when the squall does hit, the sudden rise of the wind force is wholly or partially kept away from the tower (16) of the wind power installation (17).

2. The method as in claim 1, **characterized in that** the adjustment of said rotor blades (20) to minimize the structural load and/or to damp vibrations takes place under a superordinated open-loop and/or closed-loop control scheme, and a plurality of subordinated open-loop and/or closed-loop control schemes for an individual rotor blade (20).

3. The method as in claim 1, **characterized in that** in open- or closed-loop control during operation, at least vibrations having the following spectral components appear:

$$M_1 = \cos[(2\pi/60)\ 2nt]$$

and/or

$$M_2 = \sin[(2\pi/60)\, 3nt];$$

wherein

n = rotation speed of the rotor
t = time.

4. The method as in one of the preceding claims, **characterized in that** the two connecting elements (2, 3) of the slewing bearing (1) used to rotatably support the rotor blades (20) on the rotor hub (18) are each preferably made of a steel that has been tempered and annealed and, if appropriate, subsequently thermally treated.

5. The method as in one of the preceding claims, **characterized in that** said surface-hardened raceways are induction-hardened or flame-hardened, whereby preferably the thickness $d_H$ of the surface-hardened raceway layer is equal to at least $1/16^{th}$ of the particular rolling element diameter $D_w$:

$$d_H \geq 0.06 * D_w.$$

6. The method as in one of the preceding claims, **characterized in that** the rotatable mounting of said rotor blades (20) on said rotor hub (18) is effected with the use of respective rolling bearings (1) each having at least one row of rolling elements (9-11), wherein the rolling elements (9-11) of at least two rows each form linear areas of contact with their respective raceways.

7. The method as in one of the preceding claims, **characterized in that** the rotatable mounting of said rotor blades (20) on said rotor hub (18) is effected with the use of respective slewing bearings (1) whose axial load capacity $F_a$ is greater than their radial load capacity $F_r$:

$$F_a > F_r,$$

particularly by a factor of at least 1.25:

$$F_a/F_r > 1.25.$$

**Revendications**

1. Méthode de dimensionnement d'une éolienne (17) dont la puissance nominale électrique $P_{W.Nom}$ est égale ou supérieure à 1,5 MW, et/ou dont le diamètre de rotor est égal ou supérieur à 70 m, et/ou qui présente au moins un palier de pale de rotor (1) d'un diamètre du cercle de roulement $D_{pw}$ de 1500 mm ou supérieur, avec plusieurs pales de rotor (20) qui sont réglables indépendamment l'une de l'autre et qui sont alors réglées pour réduire la charge structurelle statique et/ou dynamique et/ou pour amortir des vibrations et/ou pour compenser des forces et couples gênants, par exemple en générant des forces antagonistes, lorsqu'une vitesse de vent constante $v_\infty$ ne le requiert pas, des raccords rotatifs de palier à roulement (1) étant respectivement utilisés pour le logement des pales de rotor (20) avec deux éléments (2, 3) annulaires concentriques l'un par rapport à l'autre, pouvant tourner dans des sens opposés, destinés au raccordement au moyeu de rotor (18) d'une part ainsi qu'au raccordement à une pale de rotor (20) d'autre part, où un espace périphérique en forme de fente (4) est prévu entre les deux éléments de raccordement (2, 3), ledit espace est étanchéifié (14, 15) au niveau des deux faces frontales (5, 6 ; 7, 8) du raccord rotatif (1) et est rempli d'un lubrifiant, en particulier d'une graisse, d'une surface $F_Q$ de la section de bague de palier totale exempte d'évidements d'un palier de pale de rotor (1) et d'un rayon $R_{F,SP}$ du centre de gravité de surface de la surface de section du palier de pale de rotor (1), ainsi que d'un volume de construction $V = Fq * 2 * \pi * R_{F,SP}$, calculé à partir de la surface $F_Q$ de la section de palier corrigée des évidements fois le périmètre $2 * \pi * R_{F,SP}$ au centre de gravité de surface, et d'une charge de base $C_{a,ges}$ axiale dynamique, définie selon la norme DIN ISO 281, de toutes les rangées ($\mu$) participant à la transmission de force en sens axial d'un palier à roulement (1) utilisé, **caractérisée en ce que**

a) dans le cadre des paliers à roulement de pale de rotor (1) pour les rangées participant à la transmission de force en sens axial de corps de roulement (9, 10) des chemins de roulement à surface trempée sont prévus sans protubérance et sans cavité, l'épaisseur $d_H$ de la couche de chemin de roulement à surface trempée correspondant au moins à 1/20 du diamètre de corps de roulement $D_w$:

$$dH \geq 0{,}05 * Dw, \text{ où}$$

b) la charge de base totale $C_{a,\,ges}$ axiale dynamique, définie selon la norme DIN ISO 281, de toutes les rangées ($\mu$) participant à la transmission de force en sens axial d'un palier à roulement (1) utilisé selon DIN ISO 281 satisfait à la relation suivante :

$$C_{a,ges} \geq 0{,}89268 * [-170{,}89 * F_Q {}^* R_{F,SP}{}^{-4/3} + 149{,}63 * F_Q{}^{0,5} * R_{F,SP}{}^{-1/3} + 29{,}4 * R_{F,SP}{}^{2/3}] * F_Q{}^{17/30},$$

si $F_Q \leq 71{,}6844$ cm$^2$ ; ainsi que

$$C_{a,ges} \geq 5{,}26956 * [-170{,}89 * F_Q {}^* R_{F,SP}{}^{-4/3} + 149{,}63 * F_Q{}^{0,5} * R_{F,SP}{}^{-1/3} + 29{,}4 * R_{F,SP}{}^{2/3}] * F_Q{}^{11/30},$$

si $F_Q > 71{,}6844$ cm$^2$,

c) où en outre les faces frontales (5-8) dirigées dans le même sens axial des deux éléments de raccordement (2, 3) sont disposées en décalage mutuel, une face frontale (5, 8) convexe étant vissée à la pale de rotor, l'autre au moyeu de rotor,

d) et où en outre, pour la réduction de la charge structurelle et/ou l'amortissement de vibrations, une commande ou régulation est prévue pour un réglage des pales de rotor (20) lorsqu'à leur grandeur d'entrée le signal d'au moins un capteur est utilisé qui se trouve sur, au niveau ou dans l'éolienne, à savoir le signal d'au moins un capteur de position ou d'angle accouplé à l'arbre principal du rotor (18), et le signal d'au moins un capteur pour la vitesse du vent, disposé dans la zone supérieure de la tour (16) de l'éolienne (17),

e) et où enfin une mise en réseau de l'éolienne (17) avec des éoliennes voisines est prévue, de sorte que l'éolienne (17) est informée avant l'arrivée d'une rafale de vent de cet événement via des capteurs qui ne se trouvent pas directement sur l'éolienne (17) mais sur des éoliennes voisines, pour empêcher intégralement ou partiellement, par un réglage approprié de l'angle d'attaque des pales de rotor (20), une augmentation brusque de de l'énergie éolienne de la tour (16) de l'éolienne (17), ladite augmentation étant liée normalement à l'arrivée de la rafale.

**2.** Méthode selon la revendication 1, **caractérisée en ce que** le réglage des pales de rotor (20) est effectué pour la réduction de la charge structurelle et/ou pour l'amortissement de vibrations dans le cadre d'une commande et/ou régulation, de préférence dans le cadre d'une commande et/ou régulation de niveau supérieur ainsi que de préférence de plusieurs commandes et/ou régulations subordonnées pour les pales de rotor (20) individuelles.

**3.** Méthode selon la revendication 1, **caractérisée en ce qu'**au moins des vibrations de composantes spectrales suivantes se règlent dans une commande ou régulation durant le fonctionnement :

$$M_1 = \cos [(2\pi/60)\, 2nt]$$

et/ou

$$M_2 = \sin [(2\pi/60) \, 3nt];$$

n = vitesse de rotation du rotor

t = temps.

4. Méthode selon l'une des revendications précédentes, **caractérisée en ce que** les deux éléments de raccordement (2, 3) des raccords rotatifs (1) utilisés pour le logement avec possibilité de rotation des pales de rotor (20) au niveau du moyeu de rotor (18) consistent respectivement en un acier traité par trempe et revenu ainsi que, le cas échéant, traité ensuite thermiquement.

5. Méthode selon l'une des revendications précédentes, **caractérisée en ce que** les chemins de roulement à surface trempée ont été trempés par induction ou à la flamme, où de préférence l'épaisseur $d_H$ de la couche de chemin de roulement à surface trempée correspond au moins à 1/16 du diamètre de corps de roulement $D_w$ en question :

$$d_H \geq 0{,}06 * D_w.$$

6. Méthode selon l'une des revendications précédentes, **caractérisée en ce que** pour le logement avec possibilité de rotation des pales de rotor (20) au niveau du moyeu de rotor (18) respectivement des paliers à roulement (1) avec au moins une rangée de corps de roulement (9-11) sont utilisés, où les corps de roulement (9-11) d'au moins une rangée forment respectivement des zones de contact linéaires avec leurs chemins de roulement ; de préférence des paliers à roulement (1) présentant deux rangées ou plus de corps de roulement (9-11) sont utilisés, où les corps de roulement (9-11) d'au moins deux rangées forment respectivement des zones de contact linéaires avec leurs chemins de roulement.

7. Méthode selon l'une des revendications précédentes, **caractérisée en ce que** pour le logement avec possibilité de rotation des pales de rotor (20) au niveau du moyeu de rotor (18) respectivement des raccords rotatifs (1) sont utilisés dont la force portante axiale $F_a$ est supérieure à leur force portante radiale $F_r$ :

$$F_a > F_r$$

en particulier d'un facteur d'au moins 1,25 :

$$F_a/F_r > 1{,}25.$$

FIG.1

20 — 17

18 — 19

16

**FIG.2a**

16

**FIG.2b**

16

**FIG.2c**

h

$V_\infty$

$v(h)$

16

**FIG.3**

21

FIG. 4

FIG.5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0177524 A1
- EP 1701034 A2
- DE 10113038 A1
- DE 19739164 A1
- WO 0133075 A1
- WO 2007104306 A1